(19) Europäisches Patentamt
European Patent Office
Office européen des brevets

(11) **EP 4 372 882 B1**

(12) **EUROPEAN PATENT SPECIFICATION**

(45) Date of publication and mention
of the grant of the patent:
**25.03.2026 Bulletin 2026/13**

(21) Application number: **22887612.4**

(22) Date of filing: **26.10.2022**

(51) International Patent Classification (IPC):
*H01M 50/242* (2021.01)    *H01M 50/211* (2021.01)
*H01M 50/249* (2021.01)    *H01M 4/48* (2010.01)
*H01M 10/48* (2006.01)    *H01M 10/42* (2006.01)

(52) Cooperative Patent Classification (CPC):
**H01M 50/249; H01M 10/0468; H01M 10/48;**
**H01M 50/242;** H01M 4/485; H01M 10/4207;
H01M 10/482; H01M 50/211; H01M 2010/4271;
H01M 2220/20; Y02E 60/10

(86) International application number:
**PCT/KR2022/016485**

(87) International publication number:
**WO 2023/075416 (04.05.2023 Gazette 2023/18)**

(54) **BATTERY PACK AND VEHICLE INCLUDING THE BATTERY PACK**

BATTERIEPACK UND FAHRZEUG MIT BATTERIEPACK

BLOC-BATTERIE ET VÉHICULE COMPRENANT UN BLOC-BATTERIE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **29.10.2021 KR 20210146721**

(43) Date of publication of application:
**22.05.2024 Bulletin 2024/21**

(73) Proprietor: **LG Energy Solution, Ltd.**
**Seoul 07335 (KR)**

(72) Inventors:
• **LIM, Sung Chul**
**Daejeon 34122 (KR)**
• **HAN, Hyun Gyu**
**Daejeon 34122 (KR)**
• **HUH, Geun Hoe**
**Daejeon 34122 (KR)**
• **KWAK, Seo Young**
**Daejeon 34122 (KR)**
• **KIM, Kook Ho**
**Daejeon 34122 (KR)**

(74) Representative: **Plasseraud IP**
**104 Rue de Richelieu**
**CS92104**
**75080 Paris Cedex 02 (FR)**

(56) References cited:
WO-A1-2016/063865    DE-A1- 102019 211 729
JP-A- 2015 115 313    JP-A- 2015 115 313
JP-A- 2019 114 411    JP-A- 2020 145 063
JP-A- 2020 145 063    KR-A- 20160 064 871
KR-A- 20210 073 898    US-A1- 2020 373 625
US-B2- 10 601 005

**Description**

## TECHNICAL FIELD

### Cross-reference to Related Applications

This application claims the benefit of Korean Patent Application No. 10-2021-0146721, filed on October 29, 2021, in the Korean Intellectual Property Office.

### Technical Field

The present disclosure relates to a battery pack and a vehicle including the battery pack, and more specifically, to a battery pack and a vehicle including the battery pack, wherein the battery pack effectively suppresses a swelling phenomenon of a battery cell provided in the battery pack, thereby improving the cycle lifespan properties of the battery cell.

## BACKGROUND ART

Currently, commercially available secondary batteries include nickel cadmium batteries, nickel hydride batteries, nickel zinc batteries, lithium secondary batteries, and the like. The lithium secondary batteries have almost no memory effect compared to nickel-based secondary batteries, and thus may be freely charged and discharged. In addition, the lithium secondary batteries are under the spotlight due to their advantages of having a very low self-discharge rate and a high energy density.

The lithium secondary batteries usually use a lithium-based oxide and a carbon material as a positive electrode active material and a negative electrode active material, respectively. The lithium secondary batteries include an electrode assembly in which a positive electrode plate and a negative electrode plate respectively coated with a positive electrode active material and a negative electrode active material are disposed with a separator interposed therebetween, and an exterior material for sealing and accommodating the electrode assembly together with an electrolyte.

In general, the lithium secondary batteries may be classified into can-type secondary batteries and pouch-type secondary batteries according to the type of exterior material. The can type secondary batteries have an electrode assembly embedded in a metal can. The pouch-type secondary batteries have an electrode assembly embedded in a pouch of an aluminum laminate sheet.

Recently, secondary batteries are widely used not only in small devices such as portable electronic devices, but also in medium and large devices such as vehicles and power storage devices. At least one battery pack may be mounted on the medium and large devices. In order to increase the capacity and output of the battery pack, a large number of battery cells may be accommodated inside a pack housing. In the medium and large devices, for example, a pouch-type secondary battery cell which is easy to stack are often used. Here, the pouch-type battery cells refers to a secondary battery in which an electrode assembly is accommodated in a pouch made of a soft polymer material having an irregular shape.

Meanwhile, in the case of the battery cell of the battery pack, a swelling phenomenon caused by swelling of the battery cell during repeated charging and discharging occurs. When battery cells are disposed stacked in an accommodation space inside a typical battery pack in consideration of the swelling phenomenon occurring during charging and discharging, the battery cells are disposed spaced apart from each other at regular intervals. In addition, in the prior art, a method for suppressing gas generation by pressing a battery cell has been used to suppress the swelling phenomenon of the battery cell.

However, when the swelling phenomenon of battery cells becomes severe, there may be an accident in that, as the internal pressure of the battery cell increases, a cell case of the battery cell is ruptured, internal components of the battery cell are discharged to the outside, or the battery cell explodes. Therefore, it is very important to suppress the swelling phenomenon of the battery cells provided in the battery pack in terms of increasing the lifespan and stability of the battery pack.

However, all that a method for controlling the swelling phenomenon of a battery cell of the prior art does is to press the battery cell by using a uniform pressing force of a pressing member without taking such characteristics of the battery cell into consideration. Accordingly, a battery pack of the prior art has a great limitation in controlling the swelling phenomenon according to the characteristics of the battery cell.

[Prior Art Document]

(Patent Document 1) Korean Patent Laid-Open Publication No. 10-2020-0040975;
(Patent Document 2) Japanese Patent Laid-Open Publication No. 2019-091630;
(Patent Document 3) Korean Patent Laid-Open Publication No. 10-2018-0026210;
(Patent Document 4) Korean Patent Laid-Open Publication No. 10-2020-0058248;

Prior art where pressing parts resiliently press battery cells also includes documents JP2015-115313 A and JP2020-145063 A.

## DISCLOSURE OF THE INVENTION

### TECHNICAL PROBLEM

The present disclosure provides a battery pack and a vehicle including the battery pack, wherein the swelling phenomenon of a battery cell provided in the battery pack is suppressed, so that the cycle lifespan properties of the battery cell are improved.

### TECHNICAL SOLUTION

According to an aspect of the present disclosure, there is provided a battery pack according to claim 1.
In an embodiment, the pressing part may include an elastic member configured to press the battery cell in a direction opposite to a direction in which the battery cell expands in volume.
In another embodiment, the battery cell may include two or more battery cells, and the battery pack may further include a buffer pad interposed between the two or more battery cells and configured to buffer volume expansion of the battery cells.
Meanwhile, according to another aspect of the present disclosure, a vehicle includes at least one battery pack described above.

### ADVANTAGEOUS EFFECTS

A battery pack of the present disclosure includes a pressing part configured to elastically press a battery cell to prevent a change in volume of the battery cell when charging and discharging the battery cell, and having a pressing force for pressing the battery cell set according to the content of silicon oxide with respect to the total weight of a negative electrode active material of a negative electrode, so that a swelling phenomenon may be controlled according to swelling characteristics of the batter cell. That is, the inventor of the present disclosure found out that, depending on the content of silicon oxide provided as a negative electrode active material of a battery cell, a change in volume varies according to charging and discharging of the battery cell. Accordingly, in order to control a swelling phenomenon of a battery cell mounted on a module housing, the inventor of the present disclosure invented a battery pack having a pressing part with a pressing force for pressing the battery cell set in consideration of the content of silicon oxide provided as a negative electrode active material of the battery cell. Therefore, the battery pack of the present disclosure may effectively control the swelling phenomenon of the provided battery cell, so that the lifespan and stability of the battery pack may be increased.
That is, the battery pack of the present disclosure has a pressing part with a pressing force set in consideration of the swelling phenomenon of a battery cell according to the content of a negative electrode active material of a negative electrode, so that the battery cell may not be pressed with unnecessarily excessive force, and on the contrary, when the swelling phenomenon is severe, the amount of gas generated inside the battery cell may be effectively reduced by using the pressure part set to a greater pressing force.

### BRIEF DESCRIPTION OF THE DRAWINGS

FIG. 1 is a perspective view schematically showing a battery pack according to an embodiment of the present disclosure.
FIG. 2 is a side view schematically showing a battery cell of a battery pack according to an embodiment of the present disclosure.
FIG. 3 is an exploded perspective view schematically showing components of a battery cell of a battery pack according to an embodiment of the present disclosure.
FIG. 4 is an exploded perspective view schematically showing a positive electrode, a separator, and a negative electrode of a battery cell of a battery pack according to an embodiment of the present disclosure.

FIG. 5 is a vertical cross-sectional view schematically showing a state in which the battery pack of FIG. 1 is cut along line A-A'.

FIG. 6 is a vertical cross-sectional view schematically showing a battery pack according to another embodiment of the present disclosure.

FIG. 7 is a conceptual view schematically showing a battery pack according to an embodiment of the present disclosure.

FIG. 8 is a vertical cross-sectional view schematically showing a battery pack according to another embodiment of the present disclosure.

FIG. 9 is a vertical cross-sectional view schematically showing a battery pack according to another embodiment of the present disclosure.

FIG. 10 is a schematic view of a vehicle according to an embodiment of the present disclosure.

FIG. 11 is a graph showing changes in capacity retention rate and thickness according to charge/discharge cycles of a battery cell according to Example 1 of the present disclosure.

FIG. 12 is a graph showing the capacity retention rate and expansion force according to the charge/discharge cycles of the battery cell according to Example 1 of the present disclosure.

FIG. 13 is a graph showing changes in capacity retention rate and thickness according to charge/discharge cycles of a battery cell according to Example 2 of the present disclosure.

FIG. 14 is a graph showing the capacity retention rate and expansion force according to the charge/discharge cycles of the battery cell according to Example 2 of the present disclosure.

## MODE FOR CARRYING OUT THE INVENTION

Hereinafter, the present disclosure will be described in detail with reference to the drawings. In describing the present disclosure, if it is determined that a detailed description of a related known function or configuration may unnecessarily obscure the gist of the present disclosure, the detailed description thereof will be omitted. In addition, the following examples may be modified in many different forms, and the scope of the technical idea of the present disclosure is not limited to the following examples. Rather, these examples are provided to make the present disclosure more thorough and complete, and to fully convey the technical idea of the present disclosure to those skilled in the art.

However, it should be understood that the present disclosure is not intended to limit the technology disclosed in the present disclosure to a specific embodiment, but includes various modifications, equivalents, and/or alternatives of embodiments of the present disclosure.

With regard to the description of the drawings, like reference numerals may be used for like elements.

In the present disclosure, the phases such as "have," "may have," "include," or "may include" refer to the presence of a corresponding feature (e.g., elements such as figures, functions, operations, or parts), and does not exclude the presence of additional features.

In the present disclosure, the phrases such as "A or B," "at least one of A or/and B," or "one or more of A or/and B" may include all possible combinations of items listed together. For example, "A or B," "at least one of A and B," or "at least one of A or B" may refer to all cases including (1) at least one A, (2) at least one B, or (3) at least one A and at least one B.

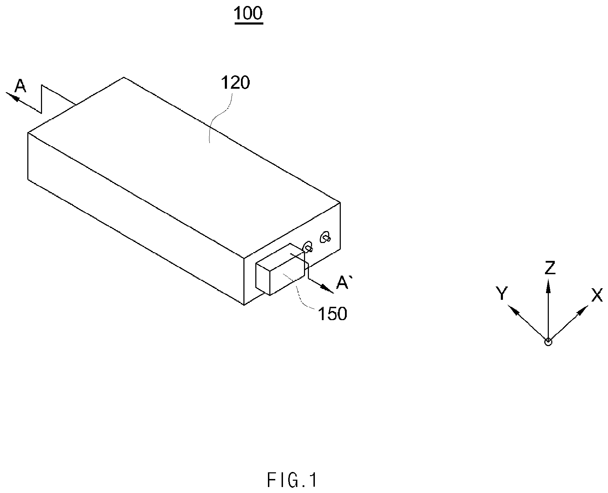

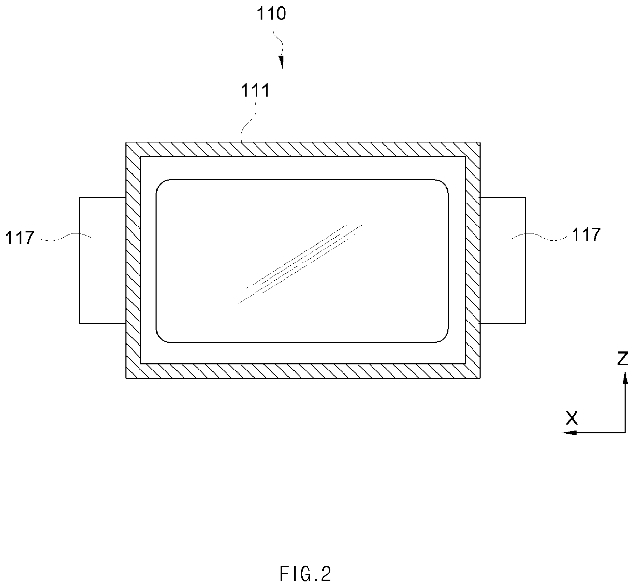

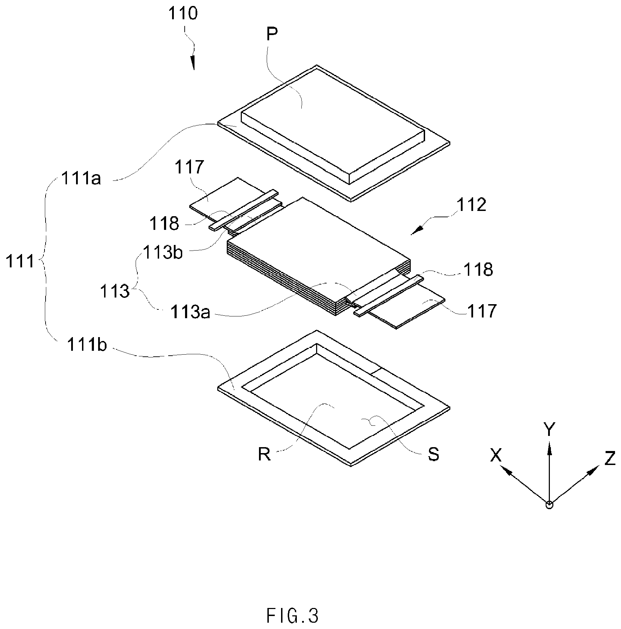

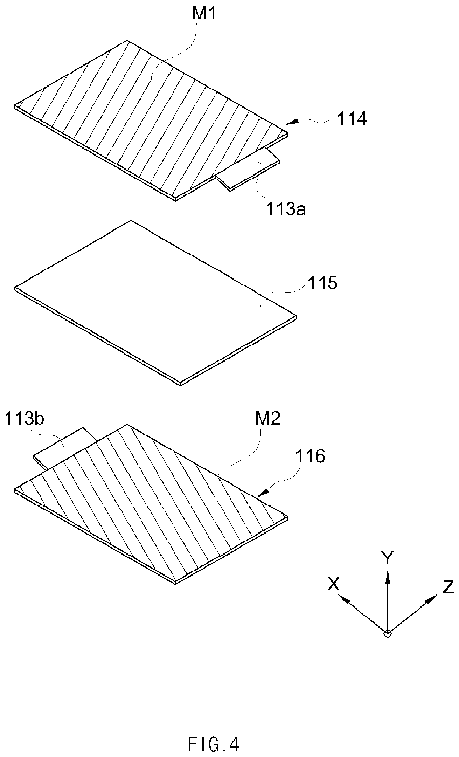

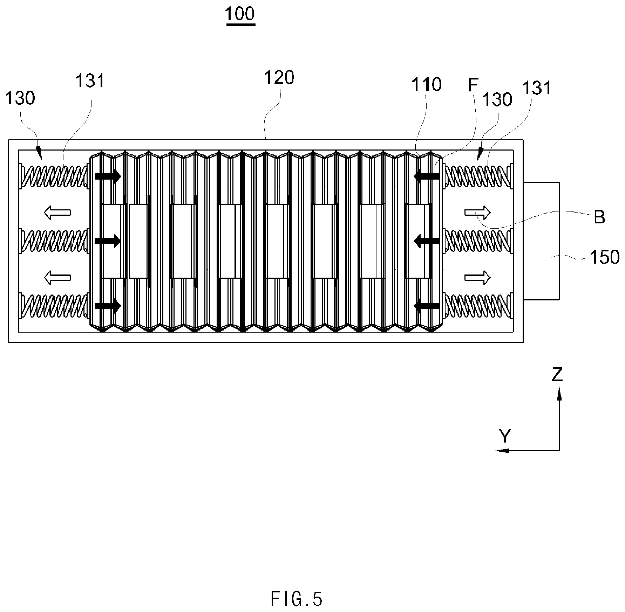

FIG. 1 is a perspective view schematically showing a battery pack 100 according to an embodiment of the present disclosure. FIG. 2 is a perspective view schematically showing a battery cell 110 of the battery pack 100 according to an embodiment of the present disclosure. FIG. 3 is an exploded perspective view schematically showing components of the battery cell 110 of the battery pack 100 according to an embodiment of the present disclosure. FIG. 4 is an exploded perspective view schematically showing a positive electrode 114, a separator 115, and a negative electrode 116 of the battery cell 110 of the battery pack 100 according to an embodiment of the present disclosure. Also, FIG. 5 is a vertical cross-sectional view schematically showing a state in which the battery pack 100 of FIG. 1 is cut along line A-A'.

Referring to FIG. 1 to FIG. 5, the battery pack 100 according to an embodiment of the present disclosure includes at least one battery cell 110, a module housing 120, and a pressing part 130.

Specifically, the battery cell 110 includes a cell case 111, an electrode assembly 112 having an electrode tab 113, an electrode lead 117, an insulation film 118, and an electrolyte (not shown).

In addition, the cell case 111 may be a pouch-type cell case made of a soft material. However, the external shape of a lithium secondary battery of the present disclosure is not particularly limited, but may be a cylindrical shape using a can, a square shape, a pouch shape, a coin shape, and the like. For example, the cell case 111 may have a first cell sheet 111a covering an upper portion of the electrode assembly 112, and a second cell sheet 111b coupled to a portion of a lower surface of the first cell sheet 111a and covering a lower portion of the electrode assembly 112. Each of the first cell sheet 111a and the second cell sheet 111b may be a laminate sheet. Specifically, the laminate sheet may have a structure in which a thin metal film (for example, an Al film) is laminated between a polymer film (nylon) having water resistance and a heat-adhesive polymer film (for example, casted polypropylene). The structure of the laminate sheet and the material constituting each layer are well known in the art to which the present disclosure belongs, and thus detailed descriptions thereof will be omitted.

An outer circumferential portion of each of the first cell sheet 111a and the second cell sheet 111b may be thermally fused to each other to seal the cell case 111. A method for performing the thermal fusion may include a process of pressing with a high-temperature tool (for example, a hot press) at least a portion of each of the outer circumferential portions facing each other in a state in which the first cell sheet 111a and the second cell sheet 111b are stacked. Here, the temperature at which the thermal fusion is achieved may be 110 degrees Celsius to 150 degrees Celsius. For example, the cell case 111 may have a sealed portion formed by thermally fusing the outer circumferential portion of each of the first cell sheet 111a and the second cell sheet 111b.

The cell case 111 may include an accommodation space S for accommodating the electrode assembly 112, the electrode lead 117, and the electrolyte. For example, the accommodation space S may be a portion deformed into a cup shape by pressing a portion of at least one of the two cell sheets 111a and 111b with a high-temperature hot press. The accommodation space S may be a portion P in which a portion of each of the cell sheets 111a and 111b convexly protrudes outward. The accommodation space S of the cell case 111 may be greater than or equal to a size in which all of the plurality of electrodes 114 and 116, the separator 115, and the electrolyte may be accommodated. For example, as shown in FIG. 3, the accommodation space S of the cell case 111 may be formed by coupling the portions P convexly protruding in an upward direction of the first cell sheet 111a and a portion R concavely formed in a downward direction of the second cell sheet 111b.

The electrodes 114 and 116 may be at least one positive electrode 114 and at least one negative electrode 116 according to electrical polarity. For example, the positive electrode 114 may be manufactured by forming a positive electrode mixture layer M1, in which a positive electrode active material, a conductive material, and a binder are mixed, on a current collector made of an aluminum alloy material. The negative electrode 116 may be manufactured by forming a negative electrode mixture layer M2, in which a negative electrode active material, a conductive material, and a binder are mixed, on a current collector made of a copper alloy material. Then, the separator 115 may be interposed between the positive electrode 114 and the negative electrode 116. The separator 115 may serve to block an internal short circuit between the positive electrode 114 and the negative electrode 116, and to impregnate the electrolyte. The separator 115 of the present disclosure may be used without any particular limitation as long as it is a separator material commonly used in a secondary battery. For example, the separator 115 may include at least one material of polyethylene and polypropylene. Then, the positive electrode 114, the separator 115, and the negative electrode 116 may be sequentially stacked to form the electrode assembly 112.

The positive electrode 114 may be manufactured by forming the positive electrode mixture layer M1 on a positive electrode current collector. The positive electrode mixture layer M1 may be formed by coating the positive electrode current collector with a positive electrode slurry including the positive electrode active material, the binder, the conductive material, a solvent, and the like, followed by drying and roll-pressing.

The positive electrode current collector is not particularly limited as long as it has conductivity without causing a chemical change in the battery. For example, stainless steel, aluminum, nickel, titanium, fired carbon, or aluminum or stainless steel that is surface-treated with one of carbon, nickel, titanium, silver, and the like may be used.

The positive electrode active material may include a lithium composite transition metal oxide having a nickel content of 50 atm% or greater, preferably 70 atm% or greater, in a transition metal in that the capacity properties and stability of the battery may increase.

The positive electrode active material may include, as a representative example, a lithium-nickel-cobalt-manganese-based oxide such as $LiNi_{0.5}Co_{0.2}Mn_{0.3}O_2$, $LiNi_{0.5}Co_{0.3}Mn_{0.2}O_2$, $LiNi_{0.6}Co_{0.2}Mn_{0.2}O_2$, $LiNi_{0.8}Co_{0.1}Mn_{0.1}O_2$, or the like. Alternatively, the positive electrode active material may include a lithium-nickel-cobalt-manganese-aluminum-based oxide.

In addition, the positive electrode active material is a compound capable of reversible intercalation and deintercalation of lithium, and may use a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-nickel-manganese-based oxide (e.g., $LiNi_{1-Y}Mn_YO_2$ (wherein, $0<Y<1$), $LiMn_{2-O}Ni_OO_4$ (wherein, $0<o<2$), etc.), a lithium-nickel-cobalt-based oxide (e.g., $LiNi_{1-Y1}Co_{Y1}O_2$ (wherein, $0<Y1<1$), etc.), a lithium-manganese-cobalt-based oxide (e.g., $LiCo_{1-Y2}Mn_{Y2}O_2$ (wherein, $0<Y2<1$), $LiMn_{2-z1}Co_{z1}O_4$ (wherein, $0 < Z1 < 2$), etc.), a lithium-nickel-cobalt-transition metal M oxide (e.g., $Li(Ni_{p2}Co_{q2}Mn_{r3}M_{S2})O_2$ (wherein, M is selected from the group consisting of Al, Fe, V, Cr, Ti, Ta, Mg, and Mo, and p2, q2, r3, and s2 are each an atomic fraction of independent elements, wherein $0<p2<1$, $0< q2<1$, $0<r3<1$, $0<s2<1$, and $p2+q2+r3+s2=1$), or a compound containing a sulfur material which may be charged and discharged by a phase transition change.

The positive electrode active material may be included in an amount of 80 wt% to 99.5 wt%, specifically 85 wt% to 95 wt%, based on the total weight of solids in the positive electrode slurry. At this time, when the content of the positive electrode active material is 80 wt% or less, energy density is lowered, so that the capacity may be lowered.

The binder is a component for assisting in bonding of an active material, a conductive material, and the like, and in bonding to a current collector, and is typically added in an amount of 1 to 30 wt% based on the total weight of solids in a positive electrode slurry. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, fluorine rubber, various copolymers thereof, and the like.

The conductive material is not particularly limited as long as it has conductivity without causing a chemical change in the battery, and for example, at least one of carbon powder such as carbon black, acetylene black, Ketjen black, channel black, furnace black, lamp black, or thermal black; graphite powder having a very developed crystal structure such as natural graphite, artificial graphite, or graphite; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; and a conductive material such as a polyphenylene derivative may be used.

The conductive material is typically added in an amount of 1 to 30 wt% based on the total weight of solids in a positive electrode slurry. The solvent may include an organic solvent such as N-methyl-2-pyrrolidone (NMP), and may be used in an amount such that a preferred viscosity is achieved when a positive electrode active material, and selectively, a binder and a conductive material, and the like are included. For example, the solvent may be included in an amount such that the concentration of solids in a slurry including a positive electrode active material, and selectively, a binder and a conductive material is 10 wt% to 70 wt%, preferably 20 wt% to 60 wt%.

The negative electrode 116 may be manufactured by forming the negative electrode mixture layer M2 on a negative electrode current collector. The negative electrode mixture layer M2 may be formed by coating the negative electrode current collector with a slurry including the negative electrode active material, the binder, the conductive material, a solvent, and the like, followed by drying and roll-pressing.

The negative electrode current collector typically has a thickness of 3 to 500 $\mu$m. The negative electrode current collector is not particularly limited as long as it has high conductivity without causing a chemical change in the battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, as in the case of the positive electrode current collector, microscopic irregularities may be formed on the surface of the negative electrode current collector to improve the coupling force of the negative electrode active material, and the negative electrode current collector may be used in various forms of such as a film, a sheet, a foil, a net, a porous body, a foam body, and a non-woven fabric body.

The negative electrode active material may further include at least one selected from the group consisting of a material capable of doping and undoping lithium, a lithium metal, a nickel metal, a copper metal, an SUS metal, a carbon material capable of reversibly intercalating/de-intercalating lithium ions, a metal or an alloy of the metal and lithium, a metal composite oxide, and a transition metal oxide.

As the material capable of doping and undoping lithium, Si, $SiO_x$ ($0<x\leq2$), an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, $SnO_2$, Sn-Y (wherein Y is an element selected from the group consisting of an alkali metal, an alkaline earth metal, a Group 13 element, a Group 14 element, a transition metal, a rare earth element, and a combination thereof, but not Sn), or the like may be used, and also, at least one thereof may be mixed with $SiO_2$ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof. In an embodiment, the negative electrode active material may include at least a portion of silicon oxide ($SiO_x$ ($0<x\leq2$)).

As the carbon material capable of reversibly intercalating/de-intercalating lithium ions, a carbon-based negative electrode active material commonly used in a lithium ion secondary battery may be used without particular limitation, and a representative example thereof may include a crystalline carbon, an amorphous carbon, or a combination thereof. Examples of the crystalline carbon may include graphite such as planar, flaky, spherical, or fibrous natural graphite or artificial graphite, and examples of the amorphous carbon may include soft carbon (low-temperature fired carbon) or hard carbon, mezophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $LixFe_2O_3$($0\leq x\leq1$), $Li_xWO_2$($0\leq x\leq1$), and $Sn_xMe_{1-x}Me'_yO_z$ (Me: Mn, Fe, Pb, Ge; Me': Al, B, P, Si, elements in Group 1, Group 2, and Group 3 of the periodic table, halogen; $0<x\leq1$; $1\leq y\leq3$; $1\leq z\leq8$) may be used.

The transition metal oxide may be a lithium-containing titanium composite oxide (LTO), a vanadium oxide, a lithium vanadium oxide, and the like.

The negative electrode active material may be included in an amount of 80 wt% to 99 wt% based on the total weight of solids in a negative electrode slurry.

The binder is a component for assisting in bonding of a conductive material, an active material, and a current collector, and is typically added in an amount of 1 wt% to 30 wt% based on the total weight of solids in a slurry of the negative electrode 116. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, fluorine rubber, various copolymers thereof, and the like.

The conductive material is a component for further improving the conductivity of the negative electrode active material, and may be added in an amount of 1 to 20 wt% based on the total weight of solids in the negative electrode slurry. The conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; or a conductive material such as a polyphenylene derivative, and the like may be used.

The solvent may include at least one of water, N-Methyl-2-pyrrolidone (NMP), and an organic solvent such as alcohol, and may be used in an amount such that a preferred viscosity is achieved when the negative electrode active material, and selectively, a binder and a conductive material, and the like are included. For example, the solvent may be included in an amount such that the concentration of solids in a slurry including the negative electrode active material, and selectively, the binder and the conductive material as the solids is 50 wt% to 75 wt%, preferably 50 wt% to 65 wt%.

The separator 115 may serve to block internal short circuit in both electrodes and to impregnate the electrolyte. As the separator 115, a porous polymer film typically used as a separator, for example, a porous polymer film prepared with a polyolefin-based polymer, such as an ethylene homopolymer, a propylene homopolymer, an ethylene-butene copolymer, an ethylene-hexene copolymer, and an ethylene-methacrylate copolymer may be used alone, or in a laminated form thereof, or a typical porous non-woven fabric, for example, a non-woven fabric formed of a glass fiber having a high melting point or polyethylene terephthalate fiber may be used, but the present invention is not limited thereto.

At this time, the pore diameter of the porous separator is typically 0.01 $\mu$m to 50 $\mu$m, and the porosity thereof may be 5% to 95%.

In addition, the thickness of the porous separator may typically be in the range of 5 $\mu$m to 300 $\mu$m.

In the electrode tab 113, a mixture of an electrode active material, a conductive material, and a binder may not be applied. The electrode tab 113 may be a path through which electrons may move. The electrode tab 113 may be formed by cutting a non-coated portion not coated with the positive electrode active material, or may be separately formed by connecting a separate conductive member to a non-coated portion of an electrode by ultrasonic welding or the like. For example, as shown in FIG. 3, the electrode tab 113 protruding from one side of each of the positive electrode 114 and the negative electrode 116 may be provided. For example, the positive electrode 114 has a positive electrode tab 113a protruding in a negative direction of an X axis. The negative electrode 116 has a negative electrode tab 113b protruding in a positive direction of the X axis. However, the present invention is not necessarily limited thereto. For example, the electrode tab 113 may be formed on at least one of a first side, a second side, a third side, and a fourth side in each direction of the front, rear, left, and right of an electrode.

The battery cell 110 according to an embodiment of the present disclosure may further include the electrode lead 117 coupled to a portion of the electrode tab 113. The electrode lead 117 may be an electrically conductive metal. As shown in FIG. 3, the electrode lead 117 may include a positive electrode lead connected to the positive electrode tab 113a, and a negative electrode lead connected to the negative electrode tab 113b. The electrode lead 117 may be connected to one or more of the electrode tabs 113 in various ways such as welding. A portion of the electrode lead 117 may be disposed to be exposed to the outside of the cell case 111. That is, the electrode lead 117 serves as an electrode terminal of the battery cell 110. For example, when electrically connected to the positive electrode 114, the electrode lead 117 may serve as a positive electrode terminal of the battery cell 110. When electrically connected to the negative electrode 116, the electrode lead 117 may serve as a negative electrode terminal of the battery cell 110. The battery cell 110 may include the insulation film 118 configured to surround a portion of an outer surface of the electrode lead 117. The insulation film 118 may be configured to electrically insulate between the cell case 111 and the electrode lead 117, and to be thermally fused with the cell case 111.

In one embodiment, the electrolyte means an electrolyte in a solid state or a liquid state. The battery cell 110 according to an embodiment of the present disclosure may be charged and discharged through ion exchange between the positive electrode 114 and the negative electrode 116 through the electrolyte. The electrolyte may be positioned between the positive electrode 114 and the negative electrode 116 to allow ions to be moved between the positive electrode 114 and the negative electrode 116. In addition, the electrolyte may be positioned on the surface and pores of the separator 115. For example, when the battery cell 110 is a lithium secondary battery, a non-aqueous electrolyte may be typically used.

Meanwhile, the module housing 120 may be configured to accommodate at least one battery cell 110 therein. The module housing 120 may have an external appearance of a rectangular parallelepiped with a hollow inside. A portion of the module housing 120, the portion facing the battery cell 110, may be covered or coated with a non-conductive material which does not conduct electricity. The module housing 120 may have, for example, a metal or plastic. The module housing 120 may have, for example, an aluminum alloy having excellent thermal conductivity, or stainless steel. For example, the module housing 120 may have a front wall, a rear wall, a left wall, a right wall, an upper wall, and a lower wall. The battery pack 100 may include two or more battery cells 110. For example, as shown in FIG. 5, 15 battery cells 110 stacked in a front-rear direction (Y-axis direction) may be mounted on the lower wall of the module housing 120.

In addition, the pressing part 130 may be configured to elastically press the battery cell 110 to prevent a change in volume of the battery cell 110 when charging and discharging the battery cell 110. For example, when the battery pack 100 has a plurality of battery cells 110 stacked in the front-rear direction (Y-axis direction), each of a plurality of pressing parts 130 may elastically press each of front and rear sides of the plurality of battery cells 110. Here, "elastically" pressing means that the battery cell 110 is pressed by using the elastic force of the pressing part 130. For example, the pressing part 130 may have an elastically increasing pressing force for pressing the battery cell 110 as the volume of the battery cell 110 increases. On the contrary, the pressing part 130 may have an elastically decreasing pressing force for pressing the battery cell 110 as the volume of the battery cell 110 decreases.

The pressing part 130 may be set (configured) to have an appropriate amount of pressing force for pressing the battery cell 110 according to the content of silicon oxide with respect to the total weight of the negative electrode active material. For example, when the content of silicon oxide with respect to the total weight of the negative electrode active material is relatively larger than a predetermined content, the battery pack 100 may include a pressing part 130 in which a pressing force for pressing the battery cell 110 is set to be large. On the contrary, when the content of silicon oxide with respect to the total weight of the negative electrode active material is relatively smaller than a predetermined content, the battery pack 100 may include a pressing part 130 in which a pressing force for pressing the battery cell 110 is set to be small.

For example, when the content of silicon oxide is 5 wt% with respect to the total weight of the negative electrode active material, the pressing force of the pressing part 130 may be 250 kgf to 350 kgf when the battery cell 110 contracts and expands. When the content of silicon oxide is 20 wt% with respect to the total weight of the negative electrode active material, the pressing force of the pressing part 130 may be 900 kgf to 1000 kgf when the battery cell 110 contracts and expands. That is, as the content of silicon oxide increases with respect to the total weight of the negative electrode active material, the pressing part 130 may be set to larger pressing force, and on the contrary, as the content of silicon oxide decreases with respect to the total weight of the negative electrode active material, the pressing part 130 may be set to smaller pressing force. This is because when the content of silicon oxide of the negative electrode active material of the battery cell 110 is relatively high, the volume change in which the battery cell 110 expands during charging is greater.

In addition, in an embodiment, as the number of charge/discharge cycles increases, the pressing force applied by the pressing part 130 may increase. For example, when the content of silicon oxide is 5 wt% with respect to the total weight of the negative electrode active material, the pressing force of the pressing part 130 for pressing the battery cell 110 may be set to 0 kgf to 250 kgf when the charge/discharge cycle is 0 to 15 times (SoH is high), the pressing force of the pressing part 130 may be set to 100 kgf to 400 kgf when the charge/discharge cycle is 70 to 110 times, and the pressing force of the pressing part 130 may be set to 200 kgf to 500 kgf when the charge/discharge cycle is 170 to 200 times.

According to the above configuration of the present disclosure, the battery pack 100 of the present disclosure includes the pressing part 130 configured to elastically press the battery cell 110 to prevent a change in volume of the battery cell 110 when charging and discharging the battery cell 110, and having a pressing force for pressing the battery cell 110 set according to the content of silicon oxide with respect to the total weight of the negative electrode active material, so that a swelling phenomenon may be controlled according to swelling characteristics of the battery cell 110. That is, in the battery pack 100 of the present disclosure, the pressing force is set in consideration of the fact that the degree of change in volume varies according to charging and discharging of the battery cell 110 according to the type and/or content of the anode active material of the battery cell 110.

Accordingly, in order to effectively control the swelling phenomenon of the battery cell 110 mounted on the module housing 120, the battery pack 100 of the present disclosure includes the pressing part 130 having a pressing force for pressing the battery cell 110 set in consideration of the content of silicon oxide provided as the negative electrode active material of the battery cell 110. That is, in the battery pack 100 of the present disclosure, the battery cell 110 may not be pressed with unnecessarily excessive force, and on the contrary, when the swelling phenomenon is severe, the amount of gas generated inside the battery cell 110 may be effectively reduced by using the pressure part 130 set to a greater pressing force.

Meanwhile, referring back to FIG. 1 to FIG. 3, in an embodiment, the battery pack 100 includes the battery cell 110 which includes the positive electrode 114, the negative electrode 116, and the separator 115 disposed between the positive electrode 114 and the negative electrode 116. The negative electrode 116 may be configured to include silicon oxide. For example, a negative electrode is configured to include a negative electrode active material containing the silicon oxide. The battery pack 100 further includes the module housing 120 for accommodating the battery cell 110, and the pressing part 130. The pressing part 130 is configured to prevent the swelling phenomenon of the battery cell 110. The swelling phenomenon of the battery cell 110 may be different depending on the content of the silicon oxide. For example, a first battery cell (not shown) may include a negative electrode including a first negative electrode active material having a first content of silicon oxide. In this case, in a first battery pack (not shown) including the first battery cell, a first swelling phenomenon having a first expansion rate may occur. In addition, a second battery cell (not shown) may include a negative electrode including a second negative electrode active material having a second content of silicon oxide. In this case, in a second battery pack (not shown) including the second battery cell, a second swelling phenomenon having a second expansion rate may occur. Here, the first content and the second content are different from each other, and the first expansion rate and the second expansion rate are different from each other. Since different swelling phenomena occur in the first battery pack and the second battery pack, the first battery pack and the second battery pack may include different pressing parts (not shown). That is, the first battery pack and the second battery pack may respectively include a first pressing part and a second pressing part. The first pressing part is configured to press the first battery cell with a first pressing force. The second pressing part is configured to press the second battery cell with a second pressing force.

Therefore, the battery pack 100 of the present disclosure may effectively control the swelling phenomenon of the provided battery cell 110 in consideration of the content of silicon oxide, so that the lifespan and stability of the battery pack 100 may be increased.

The content of the silicon oxide may be 5 wt% to 20 wt% with respect to the total weight of the negative electrode active material. When the content of the silicon oxide is less than 5 wt%, the content of the silicon oxide is excessively lower than that of the remaining negative electrode active material, so that there is a risk in that charge capacity per unit amount of a negative electrode active material mixture may decrease. In addition, when the content of the silicon oxide is greater than 20 wt%, the content of the silicon oxide is excessively higher than that of the remaining negative electrode active material, so that the expansion and contraction of the negative electrode increases as the content of the silicon oxide having a large volume change due to charging and discharging increases, and as a result, there is a risk in that the electrical contact between the silicon oxide-based negative electrode active material and a graphite-based negative electrode active material is insufficient, resulting in deterioration of cycle characteristics.

Therefore, since the content of the silicon oxide is 5 wt% to 20 wt% with respect to the total weight of the negative electrode active material, the battery pack 100 according to an embodiment of the present disclosure may have an appropriate level of energy density of the battery cell 110 mounted on the battery pack 100, and be expanded and contracted at an appropriate level controllable by the battery cell 110, so that it may be easy to control the swelling phenomenon of the battery cell 110.

Meanwhile, referring back to FIG. 5, the pressing part 130 of the battery pack 100 according to an embodiment of the present disclosure may further have an elastic member 131. The elastic member 131 may be configured to press the battery cell 110 in a direction F opposite to a direction B in which the volume of the battery cell 110 expands. For example, the elastic member 131 may be a spring having a predetermined elasticity. One end of the elastic member 131 in a direction in which elastic force is exerted may be configured to support an inner surface of the module housing 120. The other end of the elastic member 131 in the direction in which the elastic force is exerted may be configured to support one side of the battery cell 110. For example, as shown in FIG. 5, the battery pack 100 may have a plurality of elastic members 131 inside the module housing 120. The plurality of elastic members 131 may be provided at each of left and right sides with respect to the battery cell 110. Each of the plurality of elastic members 131 may be configured such that the length thereof contracts and expands according to the expansion and contraction of the battery cell 110 due to charging and discharging. For example, the elastic member 131 may be configured such that the pressing force for pressing the battery cell 110 increases when the battery cell 110 expands. On the contrary, the elastic member 131 may be configured such that the pressing force for pressing the battery cell 110 decreases when the battery cell 110 contracts.

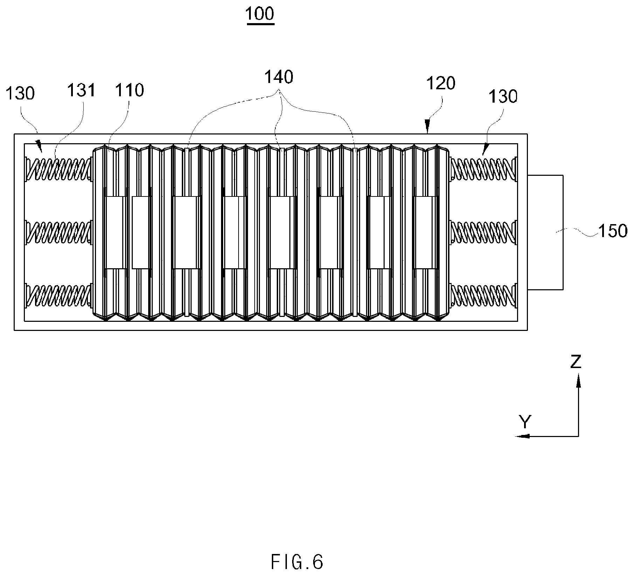

FIG. 6 is a vertical cross-sectional view schematically showing a battery pack 100 according to another embodiment of the present disclosure.

Referring to FIG. 6, the battery pack 100 of FIG. 6 according to another embodiment of the present disclosure may further include a buffer pad 140 when compared to the battery pack 100 of FIG. 5. The buffer pad 140 may be, for example, a silicon pad or a sponge. However, the buffer pad 140 is not necessarily limited to the above form, and may be applied as long as it is provided with a material capable of contracting and expanding according to the expansion and contraction of the battery cell 110 due to charging and discharging.

The buffer pad 140 may be interposed between two or more battery cells 110. For example, as shown in FIG. 6, the buffer pad 140 may be interposed between 15 battery cells 110.

Therefore, according to the above configuration of the present disclosure, the battery pack 100 of the present disclosure further includes the buffer pad 140 interposed between the two or more battery cells 110 and configured to buffer the volume expansion of the battery cells 110, and thus the two or more battery cells 110 are required to be disposed spaced apart from each other in consideration of the volume expansion occurring during the charging and discharging of each of the two or more battery cells 110, so that two or more battery cells 110 may be easily disposed spaced apart from each other at predetermined intervals in the module housing 120, the arrangement of the two or more battery cells 110 is prevented from being disordered during the use of the battery pack 100 in the above state of being spaced apart from each other, and the buffer pad 140 may distribute the expansion force of the battery cell 110 to serve to prevent pressure from being concentrated on a portion of the battery cell 110.

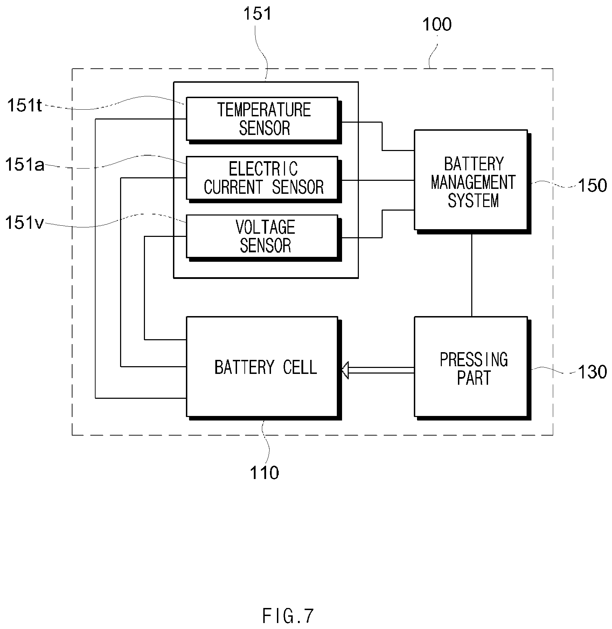

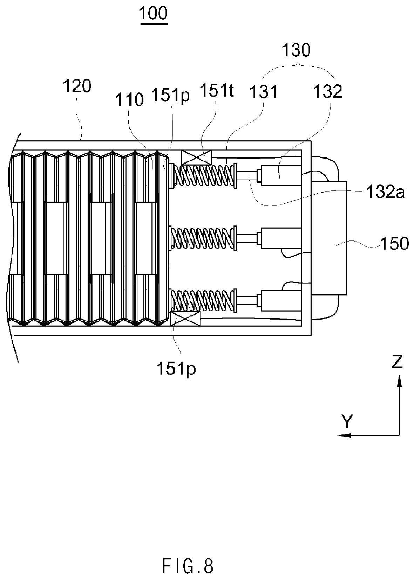

FIG. 7 is a conceptual view schematically showing a battery pack 100 according to an embodiment of the present disclosure. In addition, FIG. 8 is a vertical cross-sectional view schematically showing a battery pack 100 according to another embodiment of the present disclosure.

Referring back to FIG. 7 and FIG. 8 together with FIG. 1 and FIG. 5, the battery pack 100 according to an embodiment of the present disclosure may further include a battery management system (BMS) 150. The battery management system 150 may control to increase or decrease the pressing force of the pressing part 130 for pressing the battery cell 110. For example, the battery management system 150 may have a sensor unit 151 configured to sense the state of the battery cell 110. At this time, the sensor unit 151 may include at least one of a voltage sensor 151v, an electric current sensor 151a, and a temperature sensor 151t. The voltage sensor 151v and the electric current sensor 151a may be electrically connected to the battery cell 110. The temperature sensor 151t may be positioned inside the module housing 120. For example, the voltage sensor 151v and the electric current sensor 151a may be embedded in the battery management system 150. For example, the battery management system 150 may use the electric current sensor 151a, the voltage sensor 151v, and the temperature sensor 151t to measure the temperature, voltage, and electric current of the battery cell 110.

The battery management system 150 may be configured to acquire information on the battery cell 110. For example, the battery management system 150 may be configured to acquire state information of at least one of a state of health (SoH), a charge/discharge cycle, and a volume expansion coefficient of the battery cell 110. However, the information on the battery cell 110 is not limited thereto. Here, the term 'SoH' may be a health level of the battery cell 110 representing a deterioration state. In other words, the SOH may be referred to as battery capacity retention. Here, the term 'charge/discharge cycle' means that the battery cell 110 is charged to a predetermined capacity and then discharged to a predetermined capacity. Here, the term 'volume expansion coefficient' means a volume change rate of the battery cell 110 in a charged state and a discharged state.

For example, the battery management system 150 may calculate a State of Charge (SoC) by using a known technique with the measured temperature, voltage, and current of the battery cell 110. In an embodiment, the battery management system 150 may calculate the SoH using the following equation.

Equation: Actual capacity = Actual cumulative electric current / SoC change amount                    Equation:

When explaining a process of calculating an actual capacity by using the equation, and calculating a SoH value using the calculated actual capacity as an example, when, for example, the initial capacity of a battery is 50 Ah, a SoC in standby before charging is 20%, a SoC in standby after the charging is 70%, and a measured cumulative current for a predetermined period is 20 Ah, the actual capacity may be calculated by dividing a measured cumulative electric current by an amount of change in SoC. That is, the actual capacity is calculated as 20 Ah X 100 ÷ (70% - 20%) = 40 Ah, and the actual SoH is calculated as (40 Ah ÷ 50 Ah) X 100 = 80%. Therefore, in this case, the SoH value is calculated as 80%.

In addition, the battery management system 150 may be configured to increase the pressing force of the pressing part 130 or decrease the pressing force of the pressing part 130 on the basis of an acquired SOH of the battery cell 110. For example, the battery management system 150 may increase the pressing force of the pressing part 130 as an acquired SOH decreases. On the contrary, the battery management system 150 may decrease the pressing force of the pressing part 130 as an acquired SOH increases.

However, the battery management system 150 does not limit the factors to be considered to change the pressing force of the pressing part 130 to the SoH only. For example, the battery management system 150 may further consider at least one of the number of charge/discharge cycles of the battery cell 110, and the volume expansion coefficient of the battery cell 110.

For example, when the content of silicon oxide is 5 wt% with respect to the total weight of the negative electrode active material, the battery management system 150 may set the pressing force of the pressing part 130 for pressing the battery cell 110 to 0 kgf to 250 kgf when the charge/discharge cycle is 0 to 15 times (SoH is high), may set the pressing force of the pressing part 130 to 100 kgf to 400 kgf when the charge/discharge cycle is 70 to 110 times, and may set the pressing force of the pressing part 130 to 200 kgf to 500 kgf when the charge/discharge cycle is 170 to 200 times. For example, when the content of the silicon oxide is 20 wt% with respect to the total weight of the negative electrode active material, the battery management system 150 may set the pressing force of the pressing part 130 for pressing the battery cell 110 to be in the range of 0 to 1000 kgf in consideration of SoH or the number of charge/discharge cycles.

Therefore, the battery pack 100 of the present disclosure is configured to increase or the pressing force of the pressing part 130 or decrease the pressing force thereof in consideration of state information of at least one of the SoH, charge/discharge cycle, and volume expansion coefficient of the battery cell 110 acquired by the battery management system 150, so that the swelling phenomenon of the battery cell 110 according to the SoH of the battery cell 110 may be effectively controlled. That is, the battery pack 100 of the present disclosure has a tendency in that the volume expansion of the battery cell 110 increases as the SOH of the battery cell 110 decreases, and thus the battery management system 150 may increase the pressing force of the pressing part 130 according to the volume expansion degree of the battery cell 110, so that the swelling phenomenon of the battery cell 110 may be effectively suppressed. Accordingly, the battery pack 100 of the present disclosure may effectively extend the lifespan of the battery cell 110.

Meanwhile, referring back to FIG. 7 and FIG. 8, a pressing part 130 of the battery pack 100 according to another embodiment of the present disclosure may further include an electric cylinder 132 having a cylinder shaft 132a when compared to the battery pack 100 of FIG. 5. Here, an elastic member 131 may be connected to an end of the cylinder shaft 132a. In addition, the elastic member 131 may be, for example, a spring. Here, the electric cylinder 132 may have an electric motor (not shown).

The cylinder shaft 132a may advance, by the battery management system 150, toward the battery cell 110 so as to press the elastic member 131. On the contrary, the cylinder shaft 132a may be configured by the battery management system 150 to reverse in a direction opposite to a direction toward the battery cell 110 so as to release pressure on the elastic member 131. That is, when the cylinder shaft 132a advances toward the battery cell 110 by the control of the battery management system 150, the pressing force of the elastic member 131 for pressing the battery cell 110 may increase. On the contrary, when the cylinder shaft 132a reverses in the direction opposite (away from the battery cell) to the direction toward the battery cell 110 by the control of the battery management system 150, the pressing force of the elastic member 131 for pressing the battery cell 110 may decrease.

Therefore, the battery pack 100 according to another embodiment of the present disclosure includes the electric cylinder 132 controlled by the battery management system 150, and the elastic member 131 connected to the end of the cylinder shaft 132a of the electric cylinder 132, so that it is possible for the battery management system 150 to control the pressing force of the elastic member 131. Accordingly, the battery pack 100 of the present disclosure may appropriately control the pressing force of the pressing part 130 in consideration of the swelling (expansion) degree of the battery cell 110, or the SOH of the battery cell 110.

Meanwhile, referring to FIG. 7 and FIG. 8, in another embodiment, the sensor unit 151 may further include, for example, a pressure sensor 151p. For example, as shown in FIG. 8, the battery management system 150 may sense the degree of expansion of the battery cell 110 through the pressure sensor 151p installed inside the module housing 120. For example, as shown in FIG. 8, when the volume of two or more battery cells 110 expands, the pressure sensor 151p may be positioned inside the module housing 120 so as to be in contact with a battery cell 110 disposed at the outermost side in a stacking direction of a plurality of battery cells 110. At this time, the pressure sensor 151p may transmit a signal notifying whether the battery cell 110 is in contact to the battery management system 150 via wired communication or wireless communication.

Meanwhile, referring back to FIG. 8, the battery pack 100 according to another embodiment of the present disclosure may further include a film-type pressure sensor 151p when compared to the battery pack 100 of FIG. 5. The battery pack 100 of FIG. 8 may have the same components as those of the battery pack 100 of FIG. 5 except for the temperature sensor 151t, the pressure sensor 151p, and the electric cylinder 132.

For example, the pressure sensor 151p may be in the form of a film. The film-type pressure sensor 151p may be interposed between the battery cell 110 and the elastic member 131. The pressure sensor 151p may be configured to sense the pressing force applied to the battery cell 110 by the elastic member 131. For example, the pressure sensor 151p may have a piezoelectric element generating electricity according to the pressure applied to the sensor. The pressure sensor 151p may be electrically connected to the battery management system 150 via wires so as to transmit an electrical signal for a sensed pressure to the battery management system 150.

The battery management system 150 may be configured to increase the pressing force of the pressing part 130 or decrease the pressing force of the pressing part 130 according to a pressing force measured by the pressure sensor 151p. For example, on the basis of a pressure value measured by the pressure sensor 151p, the battery management system 150 may adjust an appropriate pressing force with which the pressing part 130 presses the battery cell 110. For example, the battery management system 150 may advance the cylinder shaft 132a of the electric cylinder 132 toward the battery cell 110 when the electric cylinder 132 measures a pressing force with which the electric cylinder 132 presses the battery cell 110 through the pressure sensor 151p, and the measured pressure is lower than a predetermined pressing force which may suppress the swelling phenomenon of the battery cell 110. On the contrary, the battery management system 150 can reverse the cylinder shaft 132a of the electric cylinder 132 in a direction away from the battery cell 110 when the measured pressure is higher than a predetermined pressure which may suppress the swelling phenomenon of the battery cell 110.

Therefore, according to the above configuration of the present disclosure, the battery pack 100 of the present disclosure further includes the pressure sensor 151p configured to sense a pressing force applied to the battery cell 110 by the elastic member 131, so that by the control of the battery management system 150, the elastic member 131 may exert a pressing force in an appropriate range which may effectively suppress the swelling phenomenon of the battery cell 110. Accordingly, the battery pack 100 of the present disclosure may prevent a failure or an accident due to the swelling phenomenon of the battery cell 110 in advance, and may effectively increase the service life of the battery pack 100.

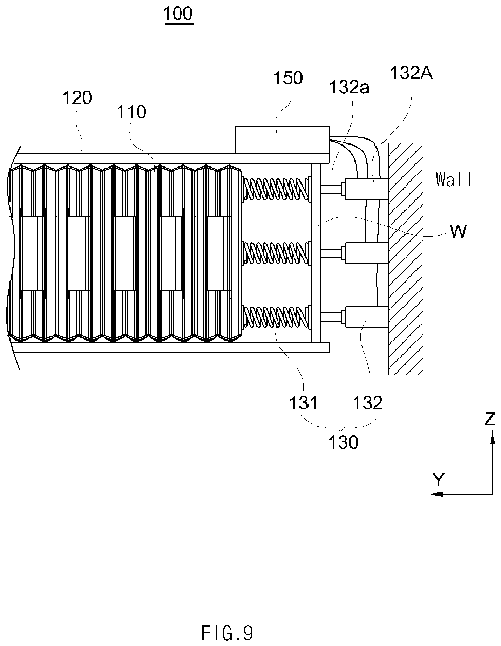

FIG. 9 is a vertical cross-sectional view schematically showing a battery pack 100 according to another embodiment of the present disclosure.

Referring to FIG. 9, the battery pack 100 according to another embodiment of the present disclosure differs from the battery pack 100 of FIG. 9 in that a movable outer wall W configured to be movable in the module housing 120 is included, and the position of the elastic member 131 is different. Other components of the battery pack 100 of FIG. 9 may be the same as those of the battery pack 100 of FIG. 8.

The movable outer wall W may be configured to support the elastic member 131 of the pressing part 130. For example, referring to FIG. 9, the movable outer wall W may be configured to support one side (right side) of the elastic member 131 of the pressing unit 130. The movable outer wall W may be configured to be movable in a direction (direction in which the battery cell is positioned) toward the battery cell 110 or in a direction opposite to the direction toward the battery cell 110. For example, as shown in FIG. 9, the movable outer wall W may be a partial sidewall (right wall) of the module housing 120. The movable outer wall W may be configured to be movable in an inner space of the module housing 120 for accommodating the battery cell 110. For example, as shown in FIG. 9, the movable outer wall W may be configured to be movable toward the battery cell 110 in the inner space of the module housing 120. The movable outer wall W may be configured to be movable in a direction away from the battery cell 110 in the inner space of the module housing 120.

The pressing part 130 may further include an electric cylinder 132A configured to move the movable outer wall W. A cylinder shaft 132a of the electric cylinder 132A may be connected to the movable outer wall W. The electric cylinder 132A may advance or reverse the cylinder shaft 132a by the control of the battery management system 150.

The electric cylinder 132A may be positioned outside the module housing 120. For example, the electric cylinder 132A may be positioned on the left or right side of the module housing 120. For example, as shown in FIG. 9, one side of the electric cylinder 132A opposite to the cylinder shaft 132a may be fixed to a wall. At this time, the cylinder shaft 132a of the electric cylinder 132A may be connected to the movable outer wall W of the module housing 120.

The cylinder shaft 132a of the electric cylinder 132A may be configured to press the movable outer wall W such that the movable outer wall W moves toward the battery cell 110. Alternatively, the cylinder shaft 132a of the electric cylinder 132A may be configured to reverse such that the movable outer wall W moves in a direction opposite to a direction toward the battery cell 110.

The pressing part 130 may further include the elastic member 131 interposed between the battery cell 110 and the movable outer wall W. The elastic member 131 may be pressed by the movable outer wall W. For example, when the cylinder shaft 132a of the electric cylinder 132A advances toward the battery cell 110 by the control of the battery management system 150, the movable outer wall W moves toward the battery cell 110, and the elastic member 131 may be compressed by the movement of the movable outer wall W. Accordingly, the pressing force of the elastic member 131 for pressing the battery cell 110 may increase.

On the contrary, when the cylinder shaft 132a of the electric cylinder 132A reverses in the direction away from the battery cell 110 by the control of the battery management system 150, the movable outer wall W moves in the direction away from the battery cell 110, and the amount of compression of the elastic member 131 by the movable outer wall W may decrease. Accordingly, the pressing force of the elastic member 131 for pressing the battery cell 110 may decrease.

Therefore, according to the above configuration of the present disclosure, since the electric cylinder 132A of the pressing part 130 is positioned outside the module housing 120, the battery pack 100 of the present disclosure may secure more internal space for accommodating the battery cell 110 of the battery pack 100 when compared to a case in which the electric cylinder 132 is positioned inside the module housing 120 like in the battery pack 100 of FIG. 8. Accordingly, the battery pack 100 of the present disclosure may effectively increase energy density.

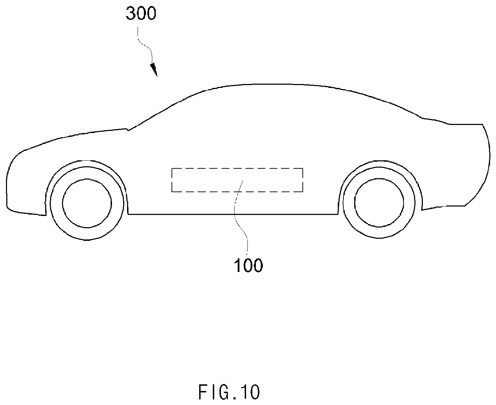

FIG. 10 is a schematic view schematically showing a vehicle 300 according to an embodiment of the present disclosure.

Referring to FIG. 10, the vehicle 300 according to an embodiment of the present disclosure includes at least one battery pack 100. The vehicle 300 of the present disclosure may include a vehicle body configured to mount the battery pack 100 in an upper portion thereof. The vehicle 300 may be, for example, a hybrid vehicle or an electric vehicle. In FIG. 10, the vehicle 300 is illustrated as an example, but it should be understood that all devices using the battery pack 100 are included in embodiments of the present disclosure.

Meanwhile, referring back to FIG. 1 to FIG. 5, a method for manufacturing a battery pack according to an embodiment of the present disclosure is a method for manufacturing the battery pack 100, and the method includes a step of preparing at least one battery cell 110 having the positive electrode 114, the separator 115, and the negative electrode 116 including the negative electrode active material having at least a portion of the silicon oxide.

The method for manufacturing a battery pack of the present disclosure includes a step of accommodating at least one battery cell 110 in an inner space formed inside the module housing 120.

In addition, the method for manufacturing a battery pack of the present disclosure includes a step of installing a pressing part 130 configured to elastically press the battery cell 110 to prevent a change in volume of the battery cell 110 when charging and discharging the battery cell 110, and having a pressing force for pressing the battery cell 110 in consideration of the content of the silicon oxide with respect to the total weight of the negative electrode active material.

Therefore, according to the above configuration of the present disclosure, since the pressing part 130 having a pressing force for pressing the battery cell 110 set according to the content of the silicon oxide with respect to the total weight of the negative electrode active material is included, volume expansion according to characteristics of swelling occurring when charging and discharging the battery cell 110 may be suppressed, so that the method for manufacturing a battery pack of the present disclosure may more effectively increase the lifespan and stability of the battery pack 100 when compared to a battery pack in which the content of silicon oxide is not considered.

Hereinafter, a change in the thickness and expansion force of a battery cell according to the content of silicon oxide in a negative electrode active material will be described through a test example.

[Example 1: Manufacturing of battery cell] (Content of $SiO_X$ is 5 wt% of total weight of negative electrode active material)

A positive electrode active material (Li[Ni, Co, Mn, Al]$O_2$) (NCMA), a conductive material (carbon black), and a binder (polyvinylidene fluoride: PVDF) were added to N-methyl-2-pyrrolidone (NMP), which is a solvent, to prepare a positive electrode active material slurry. The positive electrode active material slurry was applied to a positive electrode current collector (an aluminum thin film) having a thickness of 15 $\mu$m and dried, and then roll-pressed to manufacture a positive electrode.

Graphite, amorphous $SiO_X$ (0<x≤2) having a content of 5 wt% of the total weight of a negative electrode active material, a conductive material (carbon black), and a binder (polyvinylidene fluoride: PVDF) were added to NMP, which is a solvent, and the mixed to prepare a negative electrode active material slurry. The negative electrode active material slurry was applied to a negative electrode current collector (a copper thin film) having a thickness of 10 $\mu$m and dried, and then roll-pressed to manufacture a negative electrode.

The positive electrode, a separator composed of three layers of polypropylene/polyethylene/polypropylene (PP/PE/PP), and a negative electrode were laminated to manufacture an electrode assembly. The prepared electrode assembly was accommodated in a pouch, an electrolyte was injected thereto to impregnate the electrode assembly in an accommodation space of the pouch, and then the pouch was sealed to manufacture a battery cell. At this time, the electrolyte was prepared by dissolving lithium hexafluorophosphate (LiPF$_6$) of 1.15 M concentration in an organic solvent composed of ethylene carbonate/dimethyl carbonate/ethyl methyl carbonate (mixing volume ratio of EC/EMC/DEC is 3/4/3).

[Example 2: Manufacturing of battery cell] (Content of $SiO_X$ is 10 wt% of total weight of negative electrode active material)

A positive electrode active material (Li[Ni, Co, Mn, Al]$O_2$) (NCMA), a conductive material (carbon black), and a binder (polyvinylidene fluoride: PVDF) were added to N-methyl-2-pyrrolidone (NMP), which is a solvent, to prepare a positive electrode active material slurry. The positive electrode active material slurry was applied to a positive electrode current collector (an aluminum thin film) having a thickness of 15 $\mu$m and dried, and then roll-pressed to manufacture a positive electrode.

Graphite, amorphous $SiO_X$ (0<x≤2) having a content of 10 wt% of the total weight of a negative electrode active material, a conductive material (carbon black), and a binder (polyvinylidene fluoride: PVDF) were added to NMP, which is a solvent, and the mixed to prepare a negative electrode active material slurry. The negative electrode active material slurry was applied to a negative electrode current collector (a copper thin film) having a thickness of 10 $\mu$m and dried, and then roll-pressed to manufacture a negative electrode.

The manufactured positive electrode, a separator made of porous polyethylene having a thickness of 14 $\mu$m, and the manufactured negative electrode were stacked to manufacture an electrode assembly. The prepared electrode assembly was accommodated in a pouch, an electrolyte was injected thereto to impregnate the electrode assembly in an accommodation space of the pouch, and then the pouch was sealed to manufacture a battery cell. At this time, the electrolyte was prepared by dissolving lithium hexafluorophosphate (LiPF$_6$) of 1.15 M concentration in an organic solvent composed of ethylene carbonate/dimethyl carbonate/ethyl methyl carbonate (mixing volume ratio of EC/EMC/DEC is 3/4/3).

[Test Example]

Each of the lithium secondary batteries of Examples 1 and 2 was fixed to a 4 nm torque by using a fixing jig, and a charge/discharge cycle was performed 200 times at a charging current (0.33 C) and a discharge current (0.33 C) in a driving voltage range of 2.8 V to 4.2 V in an atmosphere at a temperature of 45°C. A load cell was installed as a pressure measurement unit to measure the expansion force due to the swelling phenomenon of the secondary battery during charging and discharging.

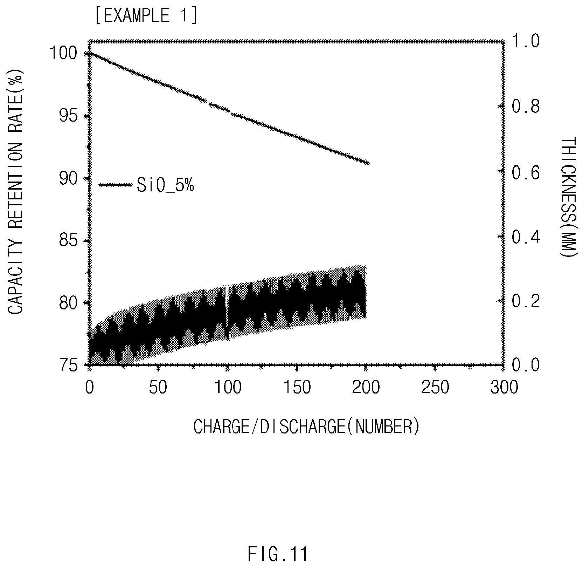

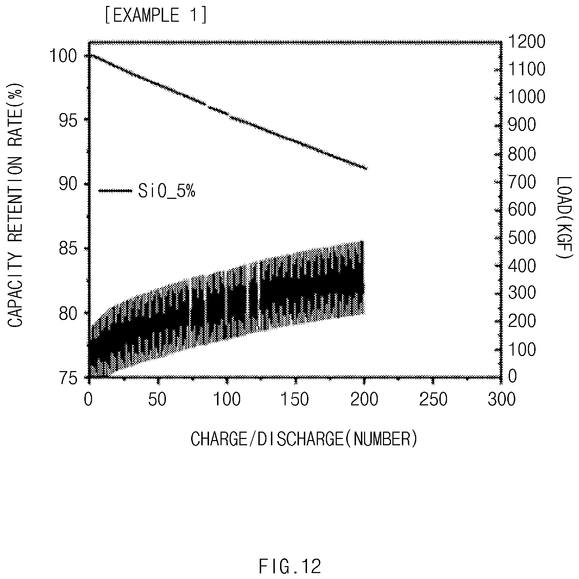

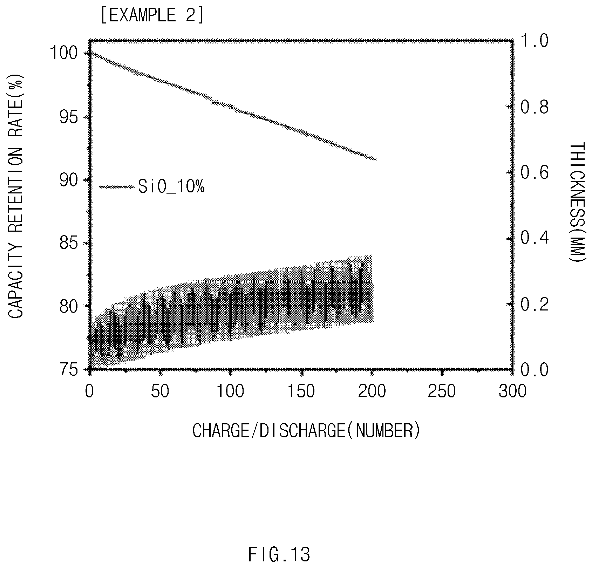

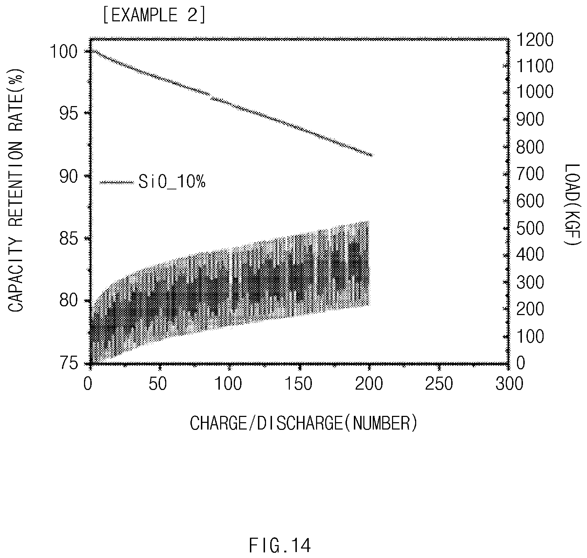

Then, the cycle capacity retention rate (corresponding to SoH), which is the ratio of a discharge capacity to an initial capacity during the 200 charge/discharge cycles of the lithium secondary battery, an amount of change in thickness of the battery cell due to the swelling phenomenon, and the expansion force were measured, and the measurement results are shown in FIG. 11 to FIG. 14.

As a result of the test, in the 200-th cycle of Example 1, the thickness displacement of the charge/discharge cycle was changed from 0.31 mm to 0.15 mm, the capacity retention rate was 91.2%, and the range of expansion force was changed from 498 kgf to 233 kgf. In the 200-th cycle of Example 2, the thickness displacement of the charge/discharge cycle was changed from 0.36 mm to 0.15 mm, the capacity retention rate was 91.3%, and the range of expansion force was changed from 530 kgf to 210 kgf.

When compared to Example 1 in which the content of silicon oxide is 5 wt%, it can be seen that Example 2 in which the content of silicon oxide is 10 wt% is about 16% greater in thickness change of the battery cell and about 6.42% greater in expansion force, based on the state of charge of the 200-th cycle. That is, through the test result, it has been confirmed that when the content of silicon oxide in a negative electrode active material increases, the thickness change and the expansion force of a battery cell are greater during charging.

In addition, in the battery pack of the present disclosure, as shown in the result of the test example, the pressing force of a pressing part corresponding to the expansion force may be set in consideration of a change aspect of the expansion force of a battery cell according to the content of silicon oxide of a negative electrode active material.

Although the embodiments have been described with reference to the limited drawings as described above, those skilled in the art may apply various technical modifications and variations based on the above. For example, even if the described techniques are performed in an order different from the order of the method described, and/or components such as the described system, structure, device, circuit, and the like are coupled or combined in a form different than that of the method described, or even replaced or substituted by other components or equivalents, appropriate results may be achieved.

[Description of Symbols]

100: Battery pack 110: Battery cell
111: Cell case 112: Electrode assembly
113, 113a, 113b: Electrode tap, positive electrode tap, negative electrode tap
114, 115, 116: Positive electrode, separator, negative electrode
117: Electrode lead 118: Insulation film
120: Module housing 130: Pressing part
131: Elastic member
132: Electric cylinder 132a: Cylinder shaft
140: Buffer pad
150: Battery management system
151: Sensor unit
151p 151t, 151a, 151v: Pressure sensor, temperature sensor, electric current sensor, voltage sensor
W: Movable outer wall
300: Vehicle

**Claims**

1. A battery pack (100) comprising:

   at least one battery cell (110) including a positive electrode (114), a separator (115), and a negative electrode (116) including a negative electrode active material having at least a portion of silicon oxide;
   a module housing (120) configured to accommodate the at least one battery cell (110) therein; and
   a pressing part (130) configured to elastically press the battery cell (110), to prevent a change in volume of the battery cell when charging and discharging the battery cell, **characterized in that** said pressing part has a pressing force for pressing the battery cell set according to the content of the silicon oxide with respect to the total weight of the negative electrode active material.

2. The battery pack of claim 1, wherein the pressing part (130) comprises an elastic member (131) configured to press the battery cell (110) in a direction opposite to a direction in which the battery cell expands in volume.

3. The battery pack of claim 1, wherein the battery cell (110) comprises two or more battery cells, and the battery pack (100) further comprises a buffer pad (140) interposed between the two or more battery cells and configured to buffer volume expansion of the battery cells.

4. A vehicle comprising at least one battery pack (100) according to any one of claims 1 to 3.

**Patentansprüche**

1. Batteriepack (100), umfassend:

wenigstens eine Batteriezelle (110), welche eine positive Elektrode (114), einen Separator (115) und eine negative Elektrode (116) umfasst, welche ein negatives Elektrodenaktivmaterial umfasst, welches wenigstens einen Abschnitt aus Siliziumoxid aufweist;
ein Modulgehäuse (120), welches dazu eingerichtet ist, die wenigstens eine Batteriezelle (110) darin aufzunehmen; und
einen Pressteil (130), welcher dazu eingerichtet ist, die Batteriezelle (110) elastisch zu pressen, um eine Volumenänderung der Batteriezelle zu verhindern, wenn die Batteriezelle geladen und Entladen wird, **dadurch gekennzeichnet, dass** der Pressteil in Bezug auf das Gesamtgewicht des negativen Elektrodenaktivmaterials eine Presskraft zum Pressen der Batteriezelle aufweist, welche gemäß der Zusammensetzung des Siliziumoxides festgelegt ist.

2. Batteriepack nach Anspruch 1, wobei der Pressteil (130) ein elastisches Element (131) umfasst, welches dazu eingerichtet ist, die Batteriezelle (110) in einer Richtung zu pressen, welche entgegengesetzt zu einer Richtung ist, in welcher ein Volumen der Batteriezelle expandiert.

3. Batteriepack nach Anspruch 1, wobei die Batteriezelle (110) zwei oder mehr Batteriezellen umfasst, und wobei der Batteriepack (100) ferner eine Pufferunterlage (140) umfasst, welche zwischen die zwei oder mehr Batteriezellen eingeführt ist und welche dazu eingerichtet ist, eine Volumenexpansion der Batteriezellen abzupuffern.

4. Fahrzeug, umfassend wenigstens einen Batteriepack (100) nach einem der Ansprüche 1 bis 3.

**Revendications**

1. Bloc-batterie (100) comprenant :

au moins une cellule de batterie (110) comportant une électrode positive (114), un séparateur (115), et une électrode négative (116) comportant un matériau actif d'électrode négative ayant au moins une portion d'oxyde de silicium ;
un boîtier de module (120) configuré pour accueillir l'au moins une cellule de batterie (110) ; et
une partie de pression (130) configurée pour presser élastiquement la cellule de batterie (110), pour empêcher un changement de volume de la cellule de batterie lors de la charge et de la décharge de la cellule de batterie, **caractérisé en ce que** ladite partie de pression présente une force de pression pour presser l'ensemble de cellules de batterie en fonction de la teneur en oxyde de silicium par rapport au poids total du matériau actif d'électrode négative.

2. Bloc-batterie selon la revendication 1, dans lequel la partie de pression (130) comprend un organe élastique (131) configuré pour presser la cellule de batterie (110) dans une direction opposée à une direction dans laquelle le cellule de batterie se dilate en volume.

3. Bloc-batterie selon la revendication 1, dans lequel la cellule de batterie (110) comprend deux cellules de batterie ou plus, et le bloc-batterie (100) comprend en outre un coussinet tampon (140) interposé entre les deux cellules de batterie ou plus et configuré pour amortir la dilatation de volume des cellules de batterie.

4. Véhicule comprenant au moins un bloc-batterie (100) selon l'une quelconque des revendications 1 à 3.

FIG.1

110

111

117

117

Z

X

FIG.2

FIG.3

M1

114

113a

115

113b    M2

116

Y

X    Z

FIG.4

100

FIG.5

FIG.6

FIG.7

FIG.8

FIG.9

300

100

FIG.10

[EXAMPLE 1]

FIG.11

FIG.12

[EXAMPLE 2]

FIG.13

[EXAMPLE 2]

FIG.14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210146721
- KR 1020200040975
- JP 2019091630 A
- KR 1020180026210
- KR 1020200058248
- JP 2015115313 A
- JP 2020145063 A